# EUROPÄISCHE PATENTANMELDUNG

(11) **EP 1 557 928 A1**
(43) Veröffentlichungstag der Anmeldung: **27.07.2005**
(21) Anmeldenummer: 04000739.5
(22) Anmeldetag: 15.01.2004
(51) Int. Cl.: H02K 1/32, H02K 9/06

(54) **Elektrische Maschine und Verfahren zur Kühlung dieser elektrischen Maschine**

(71) Anmelder: SIEMENS AKTIENGESELLSCHAFT, 80333 München (DE)
(72) Erfinder: De Filippis, Pietro, 20124 Milano (IT); Kemmer, Detlef, 97237 Altertheim (DE); Redelberger, Harald, 97273 Kürnach (DE)

(57) **Zusammenfassung**

Die Erfindung betrifft eine elektrische Maschine mit einem Rotor (1) sowie ein Verfahren zur Kühlung einer solchen Maschine. Für eine verbesserte Kühlung wird eine Maschine vorgeschlagen, bei der der Rotor (1) wenigstens einen Durchlüftungskanal (5) und ein dem Durchlüftungskanal (5) zugeordnetes Luftleitelement (19) zur Erzeugung eines Luftstromes durch den Durchlüftungskanal (5) bei rotierendem Rotor (1) aufweist.

## Beschreibung

Die Erfindung betrifft eine elektrische Maschine mit einem Rotor sowie ein Verfahren zur Kühlung einer solchen Maschine.

Elektrische Maschinen mit einem Rotor können zum einen als Generatoren zur Stromerzeugung und zum anderen als Antriebsmotoren verwendet werden. Für einen sicheren Betrieb dieser Maschinen ist es erforderlich, eine Überhitzung zu vermeiden, die zu einer Verringerung der Lebensdauer oder zu einem Totalausfall der Maschine führen kann. Insbesondere die Elektronikbaugruppen moderner Elektromotoren stellen dabei die aus thermischer Sicht kritischen Komponenten dar und erhöhen damit die Kühlungsanforderungen.

Aufgabe der vorliegenden Erfindung ist es, die Kühlung einer einen Rotor aufweisenden elektrischen Maschine zu verbessern. Diese Aufgabe wird durch eine elektrische Maschine gemäß Anspruch 1 bzw. durch ein Verfahren gemäß Anspruch 10 gelöst.

Die Erfindung basiert auf dem Grundgedanken, die Drehbewegung des Rotors selbst zur Erzeugung eines Kühlluftstromes in der elektrischen Maschine auszunutzen. Hierzu weist der Rotor wenigstens einen Durchlüftungskanal auf, der das Durchtreten von Luft durch den Rotor gestattet. Dem Durchlüftungskanal ist weiterhin ein Luftleitelement zugeordnet, welches die ausreichende Zufuhr von sich im Motorinneren befindenden Luft zu dem Durchlüftungskanal sicherstellt, während sich der Rotor bewegt. Erfindungsgemäß wird somit ein Luftstrom in der elektrischen Maschine erzeugt, der eine verbesserte Kühlung gegenüber herkömmlichen Bauformen zur Folge hat. Diese verbesserte Kühlung erlaubt bei gleicher Leistung der Maschine die Verwendung eines kleineren Bauraumes bzw. bei gleichem Bauraum eine erhöhte Leistung. Zugleich werden Ausfälle der Maschine aufgrund einer Überhitzung vermieden, wodurch eine hohe Betriebsdauer gewährleistet wird.

Während bei herkömmlichen elektrischen Maschinen, insbesondere bei Elektromotoren, für eine Kühlung stets aufwändige Zusatzbauteile, wie beispielsweise Lüfterräder, oder andere Kühlverfahren, wie beispielsweise Wasserkühlung, erforderlich sind, wird mit der Erfindung ein die Kühlung der Maschine unterstützender Luftstrom allein durch die Rotation des Rotors sichergestellt. Gegenüber herkömmlichen Maschinen lässt sich die notwendige Kühlung daher auf sehr einfache Art und Weise und darüber hinaus preiswert bereitstellen. Zudem wird erreicht, dass durch die den Rotor durchströmende Luft Wärme von dem Rotor abgeführt wird, was insbesondere bei solchen Bauformen von besonderer Bedeutung ist, bei denen der Rotor mit Permanentmagneten ausgestattet ist und Verluste durch Ummagnetisierung im Rotor auftreten.

Vorteilhafte Ausgestaltungen der Erfindung sind in den Unteransprüchen beschrieben.

In einer besonders vorteilhaften Ausführungsform der Erfindung ist das Luftleitelement nach Art einer Schaufel mit einem in Drehrichtung offenen Lufteinlass ausgebildet. Bei einem Rotieren des Rotors in Drehrichtung erfolgt eine Mitnahme der sich in unmittelbarer Nähe des Rotors befindenden Luftmassen durch die Schaufelkontur des Luftleitelementes. Die Schaufelform gewährleistet insbesondere, dass die von dem Luftleitelement erfassten Luftmassen in Richtung Rotoroberfläche geleitet werden.

In einer weiteren vorteilhaften Ausführungsform der Erfindung ist das Luftleitelement derart positioniert, dass einmal von dem Luftleitelement erfasste Luftmassen nicht wieder entweichen können, sondern am Luftleitelement entlang strömen und zwangsweise in die Eintrittsöffnung des Durchlüftungskanals eintreten. Mit anderen Worten durchtreten diese Luftmassen den Rotor durch den Durchlüftungskanal und treten auf der der Eintrittsöffnung gegenüberliegenden Seite des Rotors aus der Austrittsöffnung des Durchlüftungskanals wieder aus.

Für eine besonders effiziente Führung der Luftmassen ist es vorteilhaft, wenn das Luftleitelement auf dem Rotor aufliegt. Insbesondere kann dann ein vergleichsweise einfach aufgebautes Luftleitelement verwendet werden, welches durch Auflage auf dem Rotor die Eintrittsöffnung des Durchlüftungskanals dicht umschließt derart, dass die durch den Lufteinlass des Luftleitelements hindurchtretenden Luftmassen zwangsweise zu der Eintrittsöffnung des Durchlüftungskanals geführt werden.

In einer weiteren vorteilhaften Ausführungsform der Erfindung ist das Luftleitelement über ein Montageelement mit dem Rotor verbunden. Besonders vorteilhaft ist es dabei, wenn Luftleitelement und Montageelement einstückig miteinander verbunden und als ein integrales Bauelement ausgeführt sind. Hieraus ergeben sich neben Vorteilen bei der Herstellung dieses Bauteils zudem Vorteile bei der Montage des Luftleitelements am Rotor.

Alternativ dazu ist es ebenfalls möglich, das Luftleitelement ohne Verwendung eines zusätzlichen Montageelements direkt mit dem Rotor zu verbinden. Weiterhin kann beispielsweise die jeweils äußere Blechlamelle des Lamellenblechpaketes des Rotors so gestanzt und geprägt sein, dass mindestens ein Luftleitelement einstückig an der äußeren Blechlamelle angeformt ist.

Ganz besonders vorteilhaft ist es, wenn die direkte oder indirekte Verbindung des Luftleitelementes mit dem Rotor zugleich der Befestigung wenigstens eines Rotorbauteils am Rotor dient. So können beispielsweise im oder am Rotor aufgenommenen Permanentmagnete mit Hilfe spezieller Ausformungen an den Luftleitelementen oder den Montageelementen in ihrer Montageposition fixiert werden. Durch diese Doppelfunktion des Luftleitelements können bisher benötigte separate Befestigungselemente für einzelne Bauteile des Rotors ersatzlos entfallen.

Eine besonders einfache und dennoch robuste und sichere Verbindung des Luftleitelements mit dem Rotor wird in einer weiteren vorteilhaften Ausführungsform der Erfindung durch Bildung eines Klemmsitzes hergestellt. Dies gilt gleichermaßen für eine direkte Verbindung des Luftleitelements mit dem Rotor wie auch für die Verwendung eines Montageelements. Zugleich dient dieser Klemmsitz ggf. zur Befestigung eines Rotorbauteils.

In einer weiteren vorteilhaften Ausführungsform der Erfindung weist der Rotor ein Segmentdesign auf, wie es beispielsweise aus der DE 41 39 843 C1 bekannt ist. Dabei ist der Durchlüftungskanal in einem der Rotorsegmente angeordnet. Um besonders gute Kühleigenschaften zu erhalten, weist der Rotor mehrere Durchlüftungskanäle auf. Sind diese Durchlüftungskanäle symmetrisch angeordnet, beispielsweise in gleichmäßiger Art und Weise den Rotorsegmenten zugeordnet, wird eine besonders gleichmäßige Kühlung erzielt. Vorteilhafterweise ist dabei jedem Durchlüftungskanal ein entsprechendes Luftleitelement zugeordnet.

Unabhängig von der Anzahl der verwendeten Durchlüftungskanäle wird die Kühlwirkung erhöht, wenn nicht nur der Eintrittsöffnung des Durchlüftungskanals ein Luftleitelement zugeordnet ist, sondern auch die Austrittsöffnung des Durchlüftungskanals auf der gegenüberliegenden Seite des Rotors ein gegenläufig angeordnetes Luftleitelement aufweist. Die Luftleitelemente sind vorzugsweise so gestaltet und angeordnet, dass sie, je nach Drehrichtung des Rotors, entweder einen lokalen Überdruck oder Unterdruck an der Eintrittsöffnung bzw. an der Austrittsöffnung des jeweils zugeordneten Durchlüftungskanals erzeugen. Dadurch wird der Luftstrom durch den Rotor zusätzlich verstärkt und die Kühlwirkung weiter gesteigert. Aus Herstellungs- und Montagesicht besonders vorteilhaft ist es, wenn zu beiden Seiten des Durchlüftungskanals baugleiche Luftleitelemente verwendet werden.

Die vorliegende Erfindung wird nachfolgend anhand eines Ausführungsbeispiels beschrieben, das mit Hilfe von Zeichnungen näher erläutert wird. Hierbei zeigen:
- FIG 1: einen Rotor mit Segmentdesign,
- FIG 2: den Rotor aus FIG 1 mit Luftleitelementen,
- FIG 3: den Rotor aus FIG 2 in einer weiteren Ansicht,
- FIG 4: den Rotor aus FIG 2 in einer weiteren Ansicht,
- FIG 5: den Rotor aus FIG 2 im Montageendzustand.

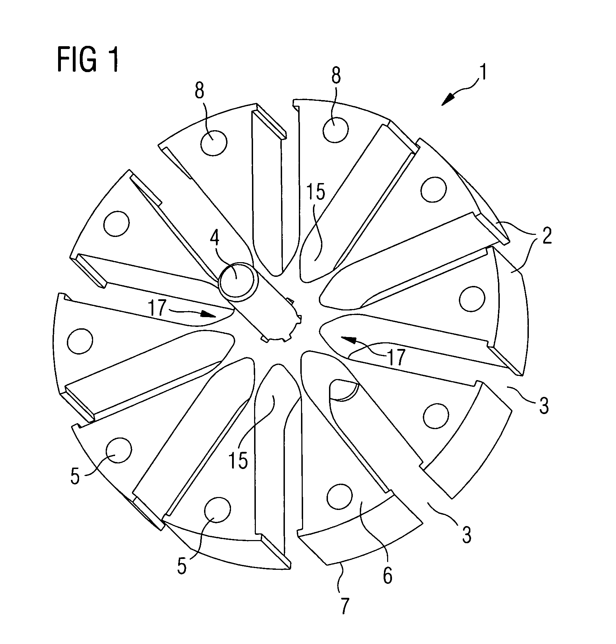

FIG 1 zeigt das Grundgerüst eines Rotors 1, wie er in einer erfindungsgemäßen elektrischen Maschine zum Einsatz kommt. Der dazugehörige Stator sowie weitere Baugruppen des Elektromotors sind aus Gründen der Übersichtlichkeit nicht dargestellt. Als Beispiel ist der permanenterregte Rotor eines bürstenlosen Elektromotors dargestellt, wie er beispielsweise für den Kühlerlüftereinsatz in Kraftfahrzeugen verwendet wird. Bei einer Verwendung des Elektromotors als Antrieb für einen Kühlerlüfter entsteht bereits durch den Druckunterschied zwischen der Abtriebsseite des Elektromotors und seiner Rückseite ein Luftstrom durch den Antrieb. Dieser Luftstrom wird nun durch den Einsatz der Erfindung noch einmal verstärkt. Selbstverständlich ist der Einsatz der Erfindung jedoch nicht auf Kühlerlüftermotoren beschränkt.

Der Rotor 1 weist ein Blechlamellenpaket in Segmentdesign auf, bei dem sich zehn Rotorsegmente 2 vom Zentrum des Rotors 1 radial nach außen erstrecken. Die zehn Aufnahmespalte 3 zwischen den Rotorsegmenten 2 sind zur Aufnahme von radial gerichteten quaderförmigen Permanentmagneten ausgebildet. In der Mitte des Rotors verläuft die Welle 4, die den Rotor 1 trägt. In jedem Rotorsegment 2 ist ein axial verlaufender Durchlüftungskanal 5 vorgesehen, welcher das Rotorsegment 2 von seiner Oberseite 6 bis zu seiner Unterseite 7 durchdringt. Die Durchlüftungskanäle 5 sind dabei derart symmetrisch angeordnet, dass die Eintrittsöffnungen 8 der Durchlüftungskanäle 5 sämtlicher Rotorsegmente 2 auf einer Kreisbahn liegen, die einen Radius aufweist, der nur wenig geringer als der Außenradius des Rotors 1 ist. Durch die Durchlüftungskanäle 5 ist ein Durchtreten von Luftmassen durch den Rotor 1 möglich. Zugleich dienen die Durchlüftungskanäle 5 der Gewichtsreduzierung der Rotorsegmente 2.

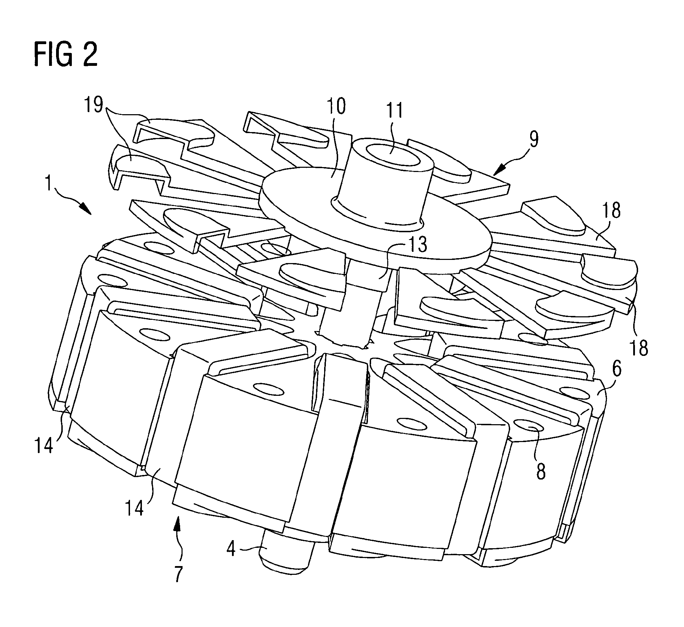

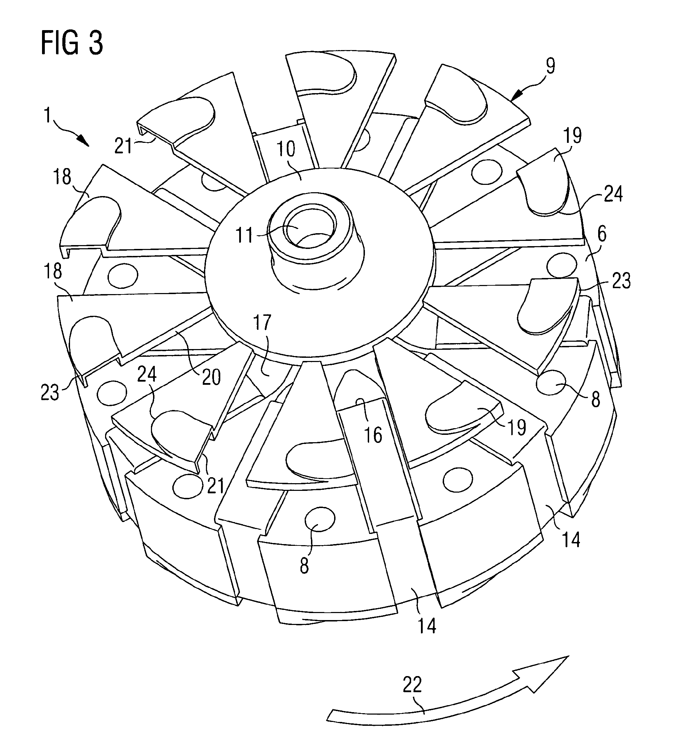

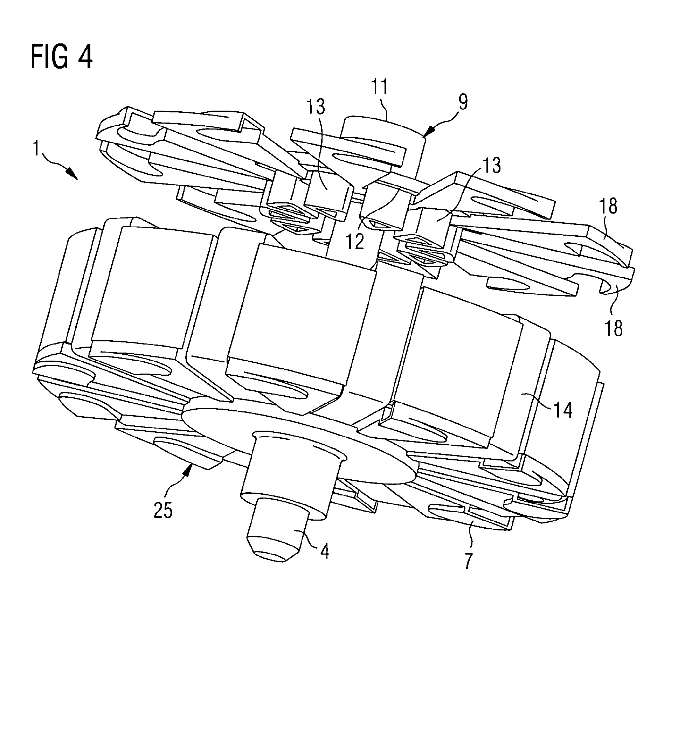

Die FIG 2, 3 und 4 zeigen jeweils einen Rotor 1 mit Luftleitelementen, wobei ein Teil der Luftleitelemente zur besseren Darstellung der konstruktiven Einzelheiten noch nicht fertig montiert ist.

Oberhalb der Rotoroberseite 6 ist ein nach Art eines Flügelrades ausgestaltetes Bauteil abgebildet, das nachfolgend als Rotorabdeckung 9 bezeichnet wird. Die Rotorabdeckung 9 beinhaltet die Lufleitelemente und stellt ein gemeinsames, zentrales Montageelement dar, das die Luftleitelemente miteinander und mit dem Rotor 1 verbindet. Das Zentrum der Rotorabdeckung 9 bildet eine Kreisscheibe 10, in deren Mitte eine Aufnahmeöffnung 11 für die Welle 4 angebracht ist. Die Rotorabdeckung 9 sitzt dabei fest auf der Welle 4 auf. An der Unterseite 12 der Kreisscheibe 10 sind auf einer Kreisbahn zehn sich in axialer Richtung erstreckende Klemmelemente 13 mit im Wesentlichen dreieckigen Querschnitten angeordnet. Die Form dieser Klemmelemente 13 ist dabei der Form der sich zum Zentrum des Rotors 1 hin verjüngenden Aufnahmespalte 3 für die Permanentmagneten 14 angepasst. Wird die Rotorabdeckung 9 auf die Welle 4 aufgepresst und damit auf die Oberseite 6 des Rotors 1 aufgesetzt, treten die Klemmelemente 13 unter Ausbildung eines Klemmsitzes mit den Wänden 15 der Rotorsegmente 2 einerseits und der hinteren Schmalseite 16 der Permanentmagnete 14 andererseits in die sich verjüngenden Endstücken 17 der Aufnahmespalte 3 ein. Mit anderen Worten wird dadurch eine kraftschlüssige Verbindung hergestellt, wobei die erforderliche Reibung durch eine Spannung erzeugt wird, die auf eine beim Fügen der Klemmelemente 13 auftretende elastische Verformung zurückzuführen ist. Die Rotorabdeckung 9 ist am Rotor 1 festgelegt. Die in den Aufnahmespalten 3 eingebetteten Permanentmagnete 14 werden radial nach außen gedrückt und sicher fixiert. Zusätzliche Federelemente od. dgl. zur Befestigung der Permanentmagnete 14 werden nicht benötigt.

Von der Kreisscheibe 10 ausgehend erstrecken sich radial gerichtete, als Flügelelemente bezeichnete, flügelartige Montageelemente 18, welche in ihrer Grundform derart gestaltet sind, dass sie die Rotorsegmente 2 oberflächig vollständig überdecken. Liegen diese Flügelelemente 18 im montierten Zustand auf den Rotorsegmenten 2 auf, so ergibt sich eine im Wesentlichen ebene, mit den Permanentmagneten 14 abschließende Rotoroberfläche.

Im Bereich der Eintrittsöffnungen 8 der Durchlüftungskanäle 5 weist jedes dieser Flügelelemente 18 eine schaufelförmige Ausformung 19 auf. Diese Ausformung 19 dient als Luftleitelement und ist derart ausgestaltet, dass sie einerseits einen mit einer Längsseite 20 des Flügelelementes 18 abschließenden Lufteinlass 21 aufweist, während sie andererseits die Eintrittsöffnung 8 des Durchlüftungskanals 5 umschließt. Es ergibt sich somit eine jedem Flügelelement 18 zugeordnete Ausformung 19, wobei sämtliche Lufteinlässe 21 in Drehrichtung 22 des Rotors 1 weisen. Im montierten Zustand ragen dabei die Lufteinlässe 21 über die ansonsten im Wesentlichen ebene Rotoroberfläche hinaus. Bei Drehung des Rotors 1 in Drehrichtung 22 erzeugen die zugeordneten Luftleitelemente einen Staudruck (Überdruck) an den Eintrittsöffnungen 8, wodurch sich ein Luftstrom durch die Durchlüftungskanäle 5 ausbildet.

In Draufsicht zeigen die Ausformungen 19 in etwa die Form einer Halbniere, wobei sich deren Breite von dem Lufteinlass 21 zu dem Scheitelpunkt 24 hin verringert. Die Öffnung des Lufteinlasses 21 erstreckt sich dabei unmittelbar von der Außenseite 23 des Flügelelementes 18 bis etwa in die Höhe der Eintrittsöffnung 8 des Durchlüftungskanals 5. Die Eintrittsöffnung 8 befindet sich im montierten Zustand direkt an dem dem Lufteinlass 21 gegenüberliegenden Scheitelpunkt 24 der Ausformung 19.

Die gesamte Rotorabdeckung 9 ist in Spritzgießtechnik aus einem Kunststoffmaterial einstückig gefertigt. Das verwendete Kunststoffmaterial muss dabei den sicheren Klemmsitz der Klemmelemente 13 über einen ausreichend langen Zeitraum gewährleisten. Darüber hinaus muss das Kunststoffmaterial auch den thermischen Anforderungen des jeweiligen Anwendungsfalles genügen.

Auf der Unterseite 7 des Rotors 1 ist eine mit der ersten Rotorabdeckung 9 identische zweite Rotorabdeckung 25 in gleicher Art und Weise befestigt. Die zweite Rotorabdeckung ist gegenüber der ersten Rotorabdeckung gegenläufig orientiert montiert. Somit sind deren den Lufteinlässe 21 entsprechende Luftauslässe entgegen der Drehrichtung 22 des Rotors 1 orientiert. Die zugeordneten Luftleitelemente erzeugen bei Drehung des Rotors 1 in Drehrichtung 22 einen Unterdruck an den Luftauslässen wodurch der Luftstrom durch die Durchlüftungskanäle 5 zusätzlich verstärkt wird. Durch das Zusammenspiel sämtlicher Klemmelemente 13 der beiden Rotorabdeckungen 9, 25 werden alle Permanentmagneten 14 des Rotors 1 sicher gehalten. Zugleich erfolgt eine sichere Fixierung der Rotorabdeckungen 9, 25 am Rotor 1.

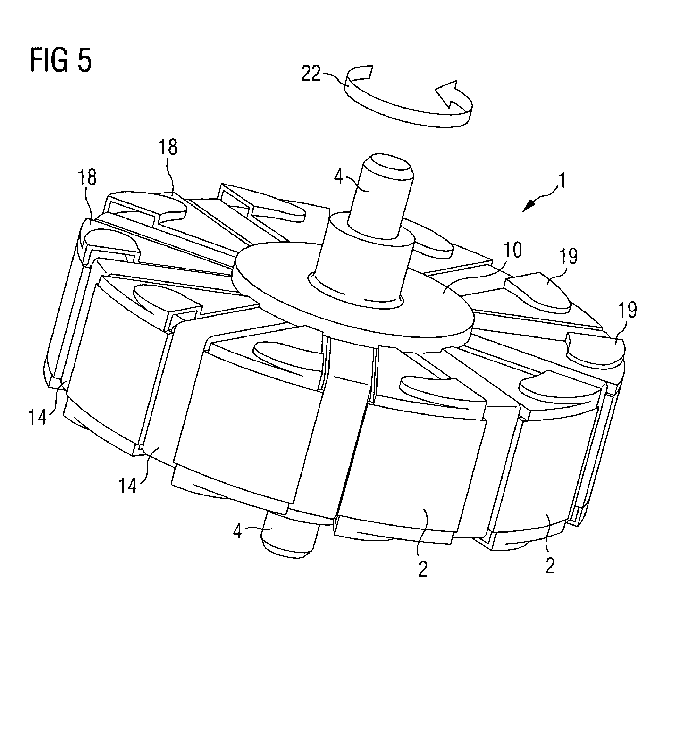

Wie in FIG 5 abgebildet, liegen die Flügelelemente 18 im montierten Zustand auf der Oberfläche der Rotorsegmente 2 dicht auf, so dass durch die Lufteinlassöffnungen 8 in die Ausformungen 19 eintretende Luft zwangsweise durch die Durchlüftungskanäle 5 hindurchgeführt wird.

Selbstverständlich kann die vorliegende Erfindung auch bei Elektromotoren und anderen elektrischen Maschinen angewendet werden, die einen von diesem Ausführungsbeispiel abweichenden Rotoraufbau aufweisen.

## Patentansprüche

1. Elektrische Maschine mit einem Rotor (1),
**dadurch gekennzeichnet, dass** der Rotor (1) wenigstens einen Durchlüftungskanal (5) mit einer Eintrittsöffnung und einer Austrittsöffnung und ein dem Durchlüftungskanal (5) zugeordnetes Luftleitelement (19) zur Erzeugung eines Luftstromes durch den Durchlüftungskanal (5) bei rotierendem Rotor (1) aufweist.

2. Elektrische Maschine nach Anspruch 1,
**dadurch gekennzeichnet, dass** das Luftleitelement (19) mit einem Montageelement (18), insbesondere zur Positionierung und Befestigung am Rotor, verbunden ist.

3. Elektrische Maschine nach Anspruch 1 oder 2,
**dadurch gekennzeichnet, dass** das Luftleitelement (19) nach Art einer Schaufel mit einem in Drehrichtung (22) offenen Lufteinlass (21) oder einem entgegen der Drehrichtung (22) offenen Luftauslass (21) ausgebildet ist.

4. Elektrische Maschine nach einem der Ansprüche 1 bis 3,
**dadurch gekennzeichnet, dass** das Luftleitelement (19) derart angeordnet ist, dass bei rotierendem Rotor (1) ein Druckunterschied zwischen der Eintrittsöffnung und der Austrittsöffnung des Durchlüftungskanals (5) erzeugt wird.

5. Elektrische Maschine nach einem der Ansprüche 2 bis 4,
**dadurch gekennzeichnet, dass** eine Verbindung des Luftleitelements (19) mit dem Rotor (1) zugleich zur Befestigung wenigstens eines Rotorbauteils (14), insbesondere eines Permanentmagnetes, am Rotor (1) dient.

6. Elektrische Maschine nach einem der Ansprüche 1 bis 5,
**dadurch gekennzeichnet, dass** das Luftleitelement (19) unmittelbar oder mit Hilfe eines Montagelements (18) unter Ausbildung eines Klemmsitzes mit dem Rotor (1) verbunden ist.

7. Elektrische Maschine nach einem der Ansprüche 1 bis 6,
**dadurch gekennzeichnet, dass** der Rotor ein permanentmagneterregter Rotor (1) ist und ein Segmentdesign aufweist, wobei Durchlüftungskanäle (5), insbesondere im Wesentlichen parallel zur Rotordrehachse, in den Rotorsegmenten (2) angeordnet sind.

8. Elektrische Maschine nach einem der Ansprüche 1 bis 7,
**dadurch gekennzeichnet, dass** einem Durchlüftungskanal (5) wenigstens je ein Luftleitelement (19) an der Eintrittsöffnung und an der Austrittsöffnung zugeordnet ist.

9. Elektrische Maschine nach einem der Ansprüche 2 bis 8,
**dadurch gekennzeichnet, dass** mehrere Luftleitelemente (19) mit einem gemeinsamen Montageelement (18) miteinander und mit dem Rotor (1) verbunden sind, wobei die Luftleitelemente (19) und das Montageelement (18) vorzugsweise als einstückiges Spritzgussteil ausgebildet sind.

10. Verfahren zur Kühlung einer elektrischen Maschine mit einem Rotor (1),
**gekennzeichnet durch** Erzeugen eines Luftstromes **durch** einen Durchlüftungskanal (5) im Rotor (1) **durch** Rotieren des Rotors (1) und unter Verwendung mindestens eines Luftleitelementes (19), welches dem Durchlüftungskanal (5) zugeordnet ist.
